(19) Europäisches Patentamt

European Patent Office

Office européen des brevets

(11) **EP 4 378 684 A1**

(12) **EUROPEAN PATENT APPLICATION**
published in accordance with Art. 153(4) EPC

(43) Date of publication:
**05.06.2024 Bulletin 2024/23**

(21) Application number: **22849425.8**

(22) Date of filing: **25.07.2022**

(51) International Patent Classification (IPC):
***B32B 27/32*** (2006.01)    ***B32B 27/34*** (2006.01)
***B65D 65/40*** (2006.01)

(52) Cooperative Patent Classification (CPC):
**B32B 27/32; B32B 27/34; B65D 65/40**

(86) International application number:
**PCT/JP2022/028597**

(87) International publication number:
**WO 2023/008364 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021125791**

(71) Applicant: **TOYOBO CO., LTD.
Osaka-shi, Osaka 530-0001 (JP)**

(72) Inventors:
- **NAGASAKA Ayame
  Inuyama-shi, Aichi 484-8508 (JP)**
- **GOTO Takamichi
  Inuyama-shi, Aichi 484-8508 (JP)**

(74) Representative: **Vossius & Partner
Patentanwälte Rechtsanwälte mbB
Siebertstrasse 3
81675 München (DE)**

(54) **LAYERED FILM AND PACKING BAG**

(57)    It is provided that a carbon neutral heat-sealable layered film that is excellent in heat resistance, impact resistance, and bending pinhole resistance, and in which a raw material derived from biomass is used. A layered film having at least a base material layer and a sealant layer, wherein the base material layer is a biaxially stretched polyamide film in which a layer B is laminated on at least one surface of a layer A, the layer A contains 70% by mass or more and 99% by mass or less of a polyamide 6 resin, and 1% by mass or more and 30% by mass or less of a polyamide resin containing a raw material derived from biomass, the layer B contains 70% by mass or more and 100% by mass or less of a polyamide 6 resin, the sealant layer is an unstretched polyolefin film, and the unstretched polyolefin film contains 70% by mass or more and 95% by mass or less of a polypropylene-based resin, and 5% by mass or more and 30% by mass or less of a linear low-density polyethylene resin in which at least a part of a raw material thereof is derived from biomass.

EP 4 378 684 A1

**Description**

TECHNICAL FIELD

The present invention relates to a layered film suitably used for a packing bag or the like.

BACKGROUND ART

A biaxially stretched film formed of an aliphatic polyamide represented by polyamide 6 is excellent in impact resistance and bending pinhole resistance, and has been widely used as various types of packing materials.

In recent years, in order to build a recycling society, use of biomass instead of fossil fuel raw materials has been attracting attention in the field of materials. Biomass is an organic compound that is photosynthesized from carbon dioxide and water, and is a so-called carbon neutral raw material from which carbon dioxide and water are regenerated when used, that is, the amount of carbon dioxide emitted and the amount of carbon dioxide absorbed in the environment are the same. Thus, biomass is a raw material that can suppress increase in carbon dioxide, which is a greenhouse gas. Practical use of biomass plastics made from these biomass raw materials has rapidly advanced, and a biaxially stretched polyamide film using a raw material derived from biomass has been proposed (see Patent Literature 1, for example).

When used as a packing body, a biaxially stretched polyamide film is made into a layered film in which a sealant film and the like are laminated, and then the layered film is processed into a packing bag or the like. As a sealant film, an unstretched linear low-density polyethylene film, an unstretched polypropylene film, or the like is used. From the viewpoint of carbon neutrality, a sealant film containing a polyethylene polymerized by using a raw material derived from biomass has been proposed (see Patent Literature 2, for example).

CITATION LIST

PATENT LITERATURE

[PTL 1] International Publication No. 2020/170714
[PTL 2] Japanese Laid-Open Patent Publication No. 2018-001612

SUMMARY OF THE INVENTION

PROBLEMS TO BE SOLVED BY THE INVENTION

An object of the present invention is to provide a carbon neutral heat-sealable layered film that is excellent in heat resistance, impact resistance, and bending pinhole resistance, and in which a raw material derived from biomass is used.

SOLUTION TO THE PROBLEMS

The present invention has the following configurations.

[1] A layered film having at least a base material layer and a sealant layer, wherein

the base material layer is a biaxially stretched polyamide film,
in the biaxially stretched polyamide film, a layer B is laminated on at least one surface of a layer A,
the layer A contains 70% by mass or more and 99% by mass or less of a polyamide 6 resin having $\varepsilon$-caprolactam derived from fossil fuel as a lactam unit, and 1% by mass or more and 30% by mass or less of a polyamide resin containing a raw material derived from biomass,
the layer B contains 70% by mass or more and 100% by mass or less of a polyamide 6 resin having $\varepsilon$-caprolactam derived from fossil fuel as a lactam unit,
the sealant layer is an unstretched polyolefin film, and
the unstretched polyolefin film contains 70% by mass or more and 95% by mass or less of a polypropylene-based resin, and 5% by mass or more and 30% by mass or less of a linear low-density polyethylene resin in which at least a part of a raw material thereof is derived from biomass.

[2] The layered film according to the above [1], wherein
the sealant layer is laminated on the layer B side of the base material layer.
[3] The layered film according to the above [1] or [2], wherein
a content of carbon-14 in the base material layer is 1% or more and 30% or less with respect to all carbons in the base material layer.
[4] The layered film according to any one of the above [1] to [3], wherein
at least a part of the raw material of the base material layer is a polyamide resin derived from biomass, and the polyamide resin derived from biomass is at least one type of a polyamide resin selected from the group consisting of polyamide 11, polyamide 410, polyamide 610, and polyamide 1010.
[5] The layered film according to any one of the above [1] to [4], wherein
a content of carbon-14 in the sealant layer is 3% or more and 30% or less with respect to all carbons in the sealant layer.
[6] The layered film according to any one of the above [1] to [5], wherein

the sealant layer has a seal layer, a core layer, and a laminate layer,
a resin composition forming the seal layer contains 94% by mass or more and 100% by mass or less of a propylene-a olefin random copolymer, and 0% by mass or more and 3% by mass or less of a linear low-density polyethylene,
a resin composition forming the core layer contains 25% by mass or more and 97% by mass or less of a propylene-a olefin random copolymer, and 3% by mass or more and 40% by mass or less of a linear low-density polyethylene,
a resin composition forming the laminate layer contains 25% by mass or more and 70% by mass or less of a propylene-a olefin random copolymer and 3% by mass or more and 50% by mass or less of a linear low-density polyethylene, and
the laminate layer, the core layer, and the seal layer are present in this order, in the sealant layer, from a surface in contact with the base material layer.

[7] The layered film according to any one of the above [1] to [6], wherein
a content of carbon-14 in the layered film is 2% or more and 30% or less with respect to all carbons in the layered film.
[8] A packing bag using the layered film according to any one of the above [1] to [7].

ADVANTAGEOUS EFFECTS OF THE INVENTION

According to the present invention, through lamination of a sealant film containing a raw material derived from biomass on a biaxially stretched polyamide film containing polyamide 6 and a specific polyamide resin polymerized from a raw material derived from biomass, a carbon neutral heat-sealable layered film excellent in heat resistance, impact resistance, and bending pinhole resistance is obtained.

DESCRIPTION OF EMBODIMENTS

[Base material layer]

Preferably, a base material layer of the present invention is composed of a biaxially stretched polyamide film. In a preferable embodiment of the present invention, the above biaxially stretched polyamide film is a biaxially stretched polyamide film in which a layer B is laminated on at least one surface of a layer A.

[Layer A]

Preferably, the layer A is composed of a polyamide resin composition at least containing 70% by mass or more and 99% by mass or less of a polyamide 6 resin and 1% by mass or more and 30% by mass or less of a polyamide resin containing a raw material derived from biomass.
When the layer A contains 70% by mass or more of the polyamide 6 resin, a biaxially stretched polyamide film excellent in mechanical strength such as impact strength and excellent in gas barrier properties for oxygen or the like is obtained.
When the layer A contains 1% by mass or more and 30% by mass or less of the polyamide resin containing a raw material derived from biomass, a carbon neutral biaxially stretched polyamide film in which a raw material derived from biomass is used is obtained, and in addition, bending pinhole resistance of the biaxially stretched polyamide film is improved. In the case of a conventionally used polyamide-based elastomer or polyolefin-based elastomer which is a bending pinhole resistance improving agent, bending pinhole resistance is improved but friction pinhole resistance tends to be deteriorated. In the present invention, by containing, at a proportion of 1% by mass or more and 30% by mass or less, the polyamide resin containing a raw material derived from biomass, a biaxially stretched polyamide film excellent in bending pinhole resistance and friction pinhole resistance simultaneously is obtained.

In the layer A, the upper limit of the content of the polyamide resin containing a raw material derived from biomass is preferably 30% by mass and more preferably 20% by mass. When the content of the polyamide resin containing a raw material derived from biomass exceeds 30% by mass, a melted film becomes unstable when the melted film is cast, and thus, it may become difficult to obtain a homogeneous unstretched film.

Polyamide 6 to be used in the layer A is usually produced by ring-opening polymerization of ε-caprolactam. Lactam monomers in the polyamide 6 obtained by the ring-opening polymerization are removed with hot water, and then the polyamide 6 is dried and melt-extruded with an extruder.

The relative viscosity of the polyamide 6 is preferably 1.8 or more and 4.5 or less, more preferably 2.6 or more and 3.2 or less. When the relative viscosity is 1.8 or more, necessary impact strength for the film can be obtained. When the relative viscosity is 4.5 or less, it becomes easy to melt-extrude a raw material resin from the extruder and to form an unstretched film.

As the polyamide 6, a usually used polyamide 6 that has been polymerized from a monomer derived from fossil fuel, and in addition, a polyamide 6 that has been chemically recycled from used polyamide 6 products such as waste plastic products, waste tire rubber, fibers, or fishing nets can also be used. As a method for obtaining the polyamide 6 that has been chemically recycled from used polyamide 6 products, it is possible to use a method in which, for example, used articles of polyamide products are collected, and then, subjected to depolymerization to obtain ε-caprolactam, the ε-caprolactam is purified, and then the polyamide 6 is polymerized.

In addition, a mechanically recycled polyamide 6 can be used in combination. The mechanically recycled polyamide 6 is, for example, a pelleted raw material obtained by: collecting out-of-specification films that are generated during production of a biaxially stretched polyamide film and that cannot be shipped and scraps that are caused as cut end members (edge trims); and subjecting the collected matter to melt-extrusion or compression molding.

< Polyamide in which at least a part of the raw material is derived from biomass >

Examples of the polyamide used in the present invention in which at least a part of raw material is derived from biomass include polyamide 11, polyamide 410, polyamide 610, polyamide 1010, polyamide MXD10, and polyamide 11/6T copolymer resin.

Polyamide 11 is a polyamide resin having a structure in which a monomer having 11 carbon atoms is bonded via an amide bond. Polyamide 11 is usually obtained using aminoundecanoic acid or undecane lactam as a monomer. In particular, aminoundecanoic acid is preferable from the viewpoint of carbon neutrality since aminoundecanoic acid is a monomer obtained from castor oil. The proportion of the structural units derived from these monomers having 11 carbon atoms is preferably 50 mol% or more, more preferably 80 mol% or more, and may be 100 mol%, of all the structural units in the polyamide 11. The above polyamide 11 is normally produced by ring-opening polymerization of the above undecane lactam. The polyamide 11 obtained by ring-opening polymerization is normally dried after lactam monomer is removed with hot water, and then melt-extruded by an extruder. Relative viscosity of polyamide 11 is preferably 1.8 to 4.5, and more preferably 2.4 to 3.2. When the relative viscosity is 1.8 or more, necessary impact strength for the film can be obtained. When the relative viscosity is 4.5 or less, it becomes easy to melt-extrude a raw material resin from the extruder and to form an unstretched film.

Polyamide 410 is a polyamide resin having a structure in which a monomer having 4 carbon atoms and a diamine having 10 carbon atoms are copolymerized. Usually, sebacic acid and tetramethylenediamine are used for the polyamide 410. As sebacic acid, one produced from castor oil derived from a vegetable oil, is preferable from an environmental point of view. As the sebacic acid used here, one obtained from castor oil is desirable from the viewpoint of environmental protection, particularly from the viewpoint of carbon neutrality.

The polyamide 610 is a polyamide resin having a structure in which a diamine having 6 carbon atoms and a dicarboxylic acid having 10 carbon atoms are copolymerized. Hexamethylene diamine and sebacic acid are usually used. Sebacic acid is preferable from the viewpoint of carbon neutrality since sebacic acid is a monomer obtained from castor oil. The total proportion of the structural unit derived from the monomer having 6 carbon atoms and the structural unit derived from the monomer having 10 carbon atoms is preferably 50 mol% or more of all the structural carbon in the polyamide 610, more preferably 80 mol% or more of all the structural carbon in the polyamide 610, and may be 100 mol% of all the structural carbon in the polyamide 610.

Polyamide 1010 is a polyamide resin having a structure in which a diamine having 10 carbon atoms and a dicarboxylic acid having 10 carbon atoms are polymerized. Usually, 1,10-Decanediamine (Decamethylenediamine) and sebacic acid are used for the polyamide 1010. Decamethylenediamine and sebacic acid are preferable from the viewpoint of carbon neutrality since decamethylenediamine and sebacic acid are monomers obtained from castor oil. The total proportion of the structural units derived from the diamine having 10 carbon atoms and the structural units derived from the dicarboxylic acid having 10 carbon atoms is preferably 50 mol% or more of all the structural units in the polyamide 1010, more preferably 80 mol% or more of all the structural units in the polyamide 1010, and may be 100 mol% of all the structural units in the polyamide 1010.

The lower limit of the content of the polyamide in which at least a part of raw material is derived from biomass and which is contained in layer A is not particularly limited, but preferably 1% by mass and more preferably 3% by mass. The upper limit of the content of the polyamide in which at least a part of raw material is derived from biomass and which is contained in layer A is 30% by mass and more preferably 20% by mass. If the content of the polyamide resin in which at least a part of raw material is derived from biomass exceeds 30% by mass, a melted film becomes unstable when the melted film is cast, so that it may become difficult to obtain a homogeneous unstretched film.

< Sub-material and additive>

Layer A can contain various additives such as another thermoplastic resin, a lubricant, a heat stabilizer, an antioxidant, an antistatic agent, an antifogging agent, a UV absorber, a dye, and a pigment, as necessary.

< Other thermoplastic resin>

Layer A in the present invention can contain thermoplastic resins other than polyamide 6 and polyamide resin in which at least a part of raw material is derived from biomass as long as the object of the present invention is not impaired. Examples of the thermoplastic resins include polyamide-based resins such as a polyamide 12 resin, a polyamide 66 resin, a polyamide 6/12 copolymer resin, a polyamide 6/66 copolymer resin, and a polyamide MXD6 resin. A thermoplastic resin other than polyamide-based resins, for example, a polyester-based polymer such as polyethylene terephthalate, polybutylene terephthalate, and polyethylene-2,6-naphthalate, a polyolefin-based polymer such as polyethylene and polypropylene, or the like may be contained as necessary. If the raw materials for these thermoplastic resins are derived from biomass, increase or decrease of carbon dioxide on the ground does not affect and environmental load can be reduced. Therefore, the raw materials for these thermoplastic resins are preferably derived from biomass.

[Layer B]

The layer B preferably comprises a polyamide resin composition containing polyamide 6 resin in a proportion of 70% by mass or more and 100% by mass or less. By containing 70% by mass or more of the polyamide 6 resin in layer B, a biaxially stretched polyamide film having excellent mechanical strength such as impact strength and excellent gas barrier properties such as for oxygen can be obtained. As the polyamide 6 resin, one that is the same as the polyamide 6 resin used for layer A can be used.

Layer B can contain various additives such as another thermoplastic resin, a lubricant, a heat stabilizer, an antioxidant, an antistatic agent, an antifogging agent, a UV absorber, a dye, and a pigment, depending on the function to be provided to the surface of layer B. In the case where layer B is used on the outer side of a packaging bag, friction pinhole resistance is required, so that it is not preferable to contain a flexible resin such as a polyamide-based elastomer or a polyolefin-based elastomer, or a substance that causes a large number of voids.

Layer B can contain thermoplastic resins other than polyamide 6 as long as the object of the present invention is not impaired. Examples of the thermoplastic resins include polyamide-based resins such as a polyamide MXD6 resin, a polyamide 11 resin, a polyamide 12 resin, a polyamide 66 resin, a polyamide 6/12 copolymer resin, and a polyamide 6/66 copolymer resin. A thermoplastic resin other than polyamide-based resins, for example, a polyester-based polymer such as polyethylene terephthalate, polybutylene terephthalate, and polyethylene-2,6-naphthalate, a polyolefin-based polymer such as polyethylene and polypropylene, or the like may be contained as necessary.

< Lubricant >

Layer B preferably contains fine particles or an organic lubricant such as aliphatic amide as a lubricant in order to improve the slipperiness of the film and make it easier to handle. The fine particles can be arbitrarily selected from inorganic fine particles such as silica, kaolin, and zeolite, or polymer-based organic fine particles such as acrylic-based or polystyrene-based. Silica fine particles are preferably used in terms of transparency and slipperiness. The average particle diameter of the fine **particles is preferably 0.5 $\mu$m or more and 5.0 $\mu$m or less, and more preferably 1.0 $\mu$m or more and 3.0 $\mu$m or less. When the average particle diameter is 0.5 $\mu$m or more, good slipperiness can be obtained. When the diameter is 5.0 $\mu$m or less, poor appearance due to surface roughness of the film can be suppressed.**

When silica fine particles are used, the pore volume of silica fine particles are preferably 0.5 ml/g or more and 2.0 ml/g or less, and more preferably 0.8 ml/g or more and 1.6 ml/g or less. When **pore volume is 0.5 ml/g or more,**

**deterioration of film transparency due to generation of voids can be suppressed. When pore volume is 2.0 ml/g or less,** surface protrusions due to the fine particles tends to be generated.

**Layer B may contain** fatty acid amide and/or fatty acid bisamide for the purpose of improving slipperiness. Examples of the fatty acid amide and/or fatty acid bisamide are erucic acid amide, stearic acid amide, ethylene bisstearic acid amide, ethylene bisbehenic acid amide, and ethylene bisoleic acid amide. When the fatty acid amide and/or the fatty acid bisamide is contained, the content amount of the fatty acid amide and/or the fatty acid bisamide is preferably 0.01 mass% or more and 0.40 mass% or less, and more preferably 0.05 mass% or more and 0.30 mass% or less. When the content amount of the fatty acid amide and/or the fatty acid bisamide is 0.01 mass% or more, slipperiness of the film can be imparted. When the amount is 0.40 mass% or less, wettability of the film can be maintained.

A polyamide-based resin such as a polyamide MXD6 resin, a polyamide 12 resin, a polyamide 66 resin, a polyamide 6/12 copolymer resin, or a polyamide 6/66 copolymer resin, can be added to layer B for the purpose of improving the slipperiness of the film.

<Antioxidant>

The layer A and the layer B of the biaxially stretched polyamide film of the present invention can contain an antioxidant. As the antioxidant, a phenol-based antioxidant is preferable. The phenol-based antioxidant is preferably a fully hindered phenol-based compound or a partially hindered phenol-based compound. Examples of such antioxidants include tetrakis-[methylene-3-(3',5'-di-t-butyl-4'-hydroxyphenyl)propionate]methane, stearyl-$\beta$-(3,5-di-t-butyl-4-hydroxyphenyl)propionate, and 3,9-bis[1,1-dimethyl-2-[$\beta$-(3-t-butyl-4-hydroxy-5-methylphenyl)propionyloxy]ethyl]2,4,8,10-tetraoxaspiro[5,5]undecane. By containing the phenol-based antioxidant, film formation operability of the biaxially stretched polyamide film is improved. In particular, when a recycled film is used as a raw material, thermal deterioration of the resin is likely to occur, which causes poor film formation operation and tends to increase the production cost. In contrast to this, by containing the antioxidant, thermal deterioration of the resin is suppressed and the operability is improved.

The base material layer of the present invention is a biaxially stretched polyamide film in which the layer B is laminated on at least one surface of the layer A. Examples of a specific configuration include a two-layer configuration of layer A/layer B and a three-layer configuration of layer B/layer A/layer B.

The thickness of the **base material layer** is not particularly limited, but when the **film of the present invention is used as a packaging material, the thickness is preferably 100 $\mu$m or less in general, may be 5 $\mu$m or more and 50 $\mu$m or less, 8 $\mu$m or more and 30 $\mu$m or less.**

The heat shrinkage rate of the biaxially stretched polyamide film of the base material layer at 160°C for 10 minutes is in the range of preferably 0.6% or more and 3.0% or less and more preferably 0.6% or more and 2.5% or less in both MD direction and TD direction. If the heat shrinkage rate exceeds 3.0%, curling or shrinkage may occur when heat is applied in the next process such as lamination or printing. In addition, the lamination strength with a sealant film may be weakened. Although it is possible to set the heat shrinkage rate to be less than 0.6%, the film may become mechanically brittle. As a result, the productivity may be deteriorated.

The impact strength of the biaxially stretched polyamide film is preferably 0.7 **J/15 $\mu$m or larger and more preferably 0.9 J/15 $\mu$m or larger.**

The haze value of the biaxially stretched polyamide film is preferably 10% or smaller, more preferably 7% or smaller, and further preferably 5% or smaller. The biaxially stretched polyamide film with small haze value has transparency and gloss, and is particularly suitable for packaging bags. If fine particles are added in order to improve the slipperiness of the film, the haze value is increased. **Therefore, if the film consists of two or more layers,** the haze value can be made smaller when the fine particles are added to only layer B. Thus, the fine particles are preferably added to only layer B.

The dynamic friction coefficient of the biaxially stretched polyamide film is preferably 1.0 or less, more preferably 0.7 or less, and further preferably 0.5 or less. When the dynamic friction coefficient of the film is small, slipperiness is improved and handling of the film becomes easy. When the dynamic friction coefficient of the film is too small, the film becomes too slippery, and becomes difficult to handle. Thus, the dynamic friction coefficient is preferably 0.15 or more.

In the biaxially stretched polyamide film, the content, i.e., biomass degree, of carbon derived from biomass as measured with radiocarbon $^{14}$C according to ASTM D6866-18 is preferably 1% or more and 30% or less with respect to all carbons in the polyamide film. Since carbon dioxide in the atmosphere contains $^{14}$C in a fixed proportion (105.5 pMC), the $^{14}$C content in plants, such as corn, that grow by taking in carbon dioxide in the atmosphere is also known to be about 105.5 pMC. It is also known that fossil fuel contains almost no $^{14}$C. Therefore, the proportion of carbon derived from biomass can be calculated by measuring the proportion of $^{14}$C contained in all carbon atoms in the film.

[Method for **Manufacturing** Biaxially Stretched Polyamide Film]

The biaxially stretched polyamide film of the base material layer can be manufactured using known production methods. **Representative production examples will be described below.**

At first, resin compositions for forming layer A and layer B are melt extruded using an extruder, and layer A and layer B are laminated using a feed block or multi-manifold, are extruded from a T-die in the form of a film. Then, the laminated product is cast on a cooling roll to be cooled, and an unstretched film is obtained.

A melting temperature of resin is preferably 220°C or higher and 350°C or lower. When the temperature is lower than the above, unmelted material or the like are generated, and poor appearance such as defect may be occurred. When the temperature is higher than the above, deterioration of resin or the like is observed, and reduction of molecular weight and deterioration in an appearance may be generated. The temperature of a die is preferably 250°C or higher and 350°C or lower. A temperature of the cooling roll is preferably -30°C or higher and 80°C or lower, further preferably 0°C or higher and 50°C or lower. In order to obtain the unstretched film by casting film-shaped molten material extruded from the T-die onto a cooling rotating drum and cooling it, the method using an air knife, the electrostatic adhesion method by applying static charge, or the like can be employed. In particular, the latter method is preferably used. The opposite side of the casted unstretched film onto the cooling roll is preferably cooled. For example, it is preferable to use a combination of the following methods: a method of contacting the opposite side of the unstretched film onto the cooling roll with the cooling liquid in the vessel; a method of applying an evaporating liquid to the opposite side of the unstretched film onto the cooling roll with a spray nozzle; method of cooling the unstretched film by spraying high-speed fluid on the opposite side of the unstretched film onto the cooling roll, and the like.

The unstretched film obtained in this way is biaxially stretched to obtain the biaxially stretched polyamide film of the present invention. **Stretching method may be either a simultaneous biaxial stretching method or a sequential biaxial stretching method. In both cases,** as a method of stretching in an MD direction, one-stage stretching or multi-stage stretching such as two-stage stretching can be used. As will be described later, multi-stage stretching in the MD direction such as two-stage stretching, rather than one-stage stretching, is preferable in terms of physical properties and uniformity of physical properties in the MD direction and a TD direction, that is, isotropy. The stretching in the MD direction in the sequential biaxial stretching method is preferably roll stretching.

The lower limit of the stretching temperature in the MD direction is preferably 50°C, more preferably 55°**C, and further** preferably 60°C. If the stretching temperature is less than 50°**C, the** resin does not soften and stretching may become difficult. The upper limit of the stretching temperature in the MD direction is preferably 120°**C,** more preferably 115°**C, and** further preferably 110°**C. If the** stretching temperature exceeds 120°**C, the resin becomes too soft and stable stretching may not be possible.**

The lower limit of the stretching ratio in the MD direction is preferably 2.2 times, more preferably 2.5 times, and further preferably 2.8 times. In the case where stretching is performed in multiple stages, the stretching ratio indicates the total stretching ratio obtained by multiplying each ratio. If the stretching ratio is less than 2.2 times, the thickness accuracy in the MD direction may be decreased, and the degree of crystallinity may become excessively low, decreasing the impact strength. The upper limit of the stretching ratio in the MD direction is preferably 5.0 times, more preferably 4.5 times, and most preferably 4.0 times. If the stretching ratio exceeds 5.0 times, subsequent stretching may become difficult.

In the case where the stretching in the MD direction is performed in multiple stages, the above-described stretching is possible as each stretching, but as for the stretching ratio, it is necessary to adjust the stretching ratio such that the product of all the stretching ratios in the MD direction is 5.0 or smaller. For example, in the case of two-stage stretching, preferably, the first-stage stretching is performed at 1.5 times or more and 2.1 times or less, and the second-stage stretching is performed at 1.5 times or more and 1.8 times or less.

The film stretched in the MD direction is stretched in the TD direction with a tenter, is heat-set, and is subjected to a relaxing treatment. The lower limit of the stretching temperature in the TD direction is preferably 50°**C,** more preferably 55°**C, and further** preferably 60°**C. If the** stretching temperature is less than 50°**C, the** resin does not soften and stretching may become difficult. The upper limit of the stretching temperature in the TD direction is preferably 190°**C,** more preferably 185°**C, and** further preferably 180°**C. If the** stretching temperature exceeds 190°**C, crystallization may occur and** stretching may be difficult.

The lower limit of the stretching ratio in the TD direction is preferably 2.8 times, more preferably 3.2 times, further preferably 3.5 times, and particularly preferably 3.8 times. In the case where stretching is performed in multiple stages, the stretching ratio indicates the total stretching ratio obtained by multiplying each ratio. If the stretching ratio is less than 2.8 times, the thickness accuracy in the TD direction may be decreased, and the impact strength may decrease due to lower the degree of crystallinity. The upper limit of the stretching ratio in the TD direction is preferably 5.5 times, more preferably 5.0 times, further preferably 4.7 times, particularly preferably 4.5 times, and most preferably 4.3 times. If the stretching ratio exceeds 5.5 times, the productivity may be decreased significantly.

The lower limit of the heat-setting temperature is preferably 210°**C and** more preferably 212°**C. If the** heat-setting temperature is low, the heat shrinkage rate becomes excessively high, so that the appearance after lamination tends to be deteriorated, or the lamination strength tends to be decreased. The upper limit of the heat-setting temperature is preferably 220°C and more preferably 218°C. If the heat-setting temperature is excessively high, the impact strength tends to be decreased.

The heat-setting time is preferably 0.5 to 20 seconds, and is further preferably 1 to 15 seconds. The heat-setting time can be set to an appropriate time in consideration of the heat-setting temperature and a wind speed in a heat-setting zone. By setting the heat-setting condition within the above range of time, crystallization and orientation relaxation can be brought to the desired state.

Performing a relaxing treatment after the heat-setting treatment is effective for controlling the heat shrinkage rate. The temperature for the relaxing treatment can be selected in the range from the heat-setting treatment temperature to glass transition temperature Tg of the resin, but is preferably heat-setting treatment temperature - 10°C or higher and glass transition temperature + 10°C or lower. The lower limit of the relaxing rate of the relaxing treatment is preferably 0.5% and more preferably 1%. The upper limit of the relaxing rate is preferably 20%, more preferably 15%, and further preferably 10%.

Furthermore, in order to improve dimensional stability depending on the application, it is possible to perform a heat treatment or a humidity control treatment on the biaxially stretched polyamide film of the base material layer. In addition, it is also possible to perform a corona treatment, a coating treatment, a flame treatment, or the like in order to make the film surface have good adhesiveness, and perform printing processing or vapor deposition proceesing of a metal material, an inorganic oxide, or the like thereon. **As a vapor-deposited film formed through vapor deposition processing, a vapor-deposited film of aluminum, or a vapor-deposited film of a single matter of silicon oxide or aluminum oxide or a mixture thereof is suitably used. Further, when a protection layer or the like is coated on such a vapor-deposited film, oxygen barrier properties or the like can be improved.**

[Sealant layer]

A sealant layer of the present invention is preferably composed of an unstretched polyolefin film. In a preferable embodiment of the present invention, the unstretched polyolefin film contains 70% by mass or more and 95% by mass or less of a polypropylene-based resin and 5% by mass or more and 30% by mass or less of a linear low-density polypropylene-based resin in which at least a part of a raw material thereof is derived from biomass.

The unstretched polyolefin film preferably has a layered structure, and further preferably includes a seal layer, a core layer, and a laminate layer. The seal layer and the laminate layer are layers positioned on the surface side of the unstretched polyolefin film, and the core layer is preferably positioned therebetween. The laminate layer is a layer suitable for attaching the biaxially stretched polyamide film, and is preferably laminated with the biaxially stretched polyamide film with an adhesive resin therebetween. The seal layer is a layer suitable for producing a packing bag through heat-sealing. With the above layer configuration, while characteristics of an unstretched polypropylene film being the sealant layer excellent in heat resistance are maintained, a larger amount of the linear low-density polyethylene resin derived from biomass can be contained.

<Seal layer>

In the present invention, the polypropylene-based resin composition forming the seal layer preferably contains a propylene-a olefin random copolymer. The content amount of propylene-a olefin random copolymer in the polypropylene-based resin composition forming the seal layer is preferably 94% by mass or more, more preferably 97% by mass or more, further preferably 99% by mass or more, and particularly preferably 100% by mass. When the content amount of propylene-a olefin random copolymer in the polypropylene-based resin composition forming the seal layer is 94% by mass or more, sufficient heat-sealing strength can be obtained.

In the present invention, the polypropylene-based resin composition forming the seal layer may contain propylene homopolymer. Containing propylene homopolymer in the polypropylene-based resin composition forming the seal layer improves slipperiness. From the point of view of heat-sealing strength, the content amount of propylene homopolymer in the polypropylene-based resin composition forming the seal layer is preferably 3% by mass or less, more preferably 2% by mass or less, further preferably 1% by mass or less, and particularly preferably 0% by mass.

In the present invention, the seal layer may contain linear low-density polyethylene. Containing linear low-density polyethylene in the seal layer can improve bending pinhole resistance. From the point of view of heat-sealing strength, the content amount of linear low-density polyethylene in the seal layer is preferably 3% by mass or less, more preferably 2% by mass or less, further preferably 1% by mass or less, and particularly preferably 0% by mass.

**<Core layer>**

In the present invention, the polypropylene-based resin composition forming the core layer preferably contains a propylene-$\alpha$ olefin random copolymer. Containing propylene-$\alpha$ olefin random copolymer in the polypropylene-based resin composition forming the core layer improves heat-sealing strength. From the point of view of heat-sealing strength, the content amount of propylene-$\alpha$ olefin random copolymer in the polypropylene-based resin composition forming the core layer is preferably 25% by mass or more, more preferably 40% by mass or more, further preferably 60% by mass or more, particularly preferably 75% by mass or more, and most preferably 80% by mass or more. From the point of view of bending pinhole resistance, the content amount of propylene-$\alpha$ olefin random copolymer in the polypropylene-based resin composition forming the core layer is preferably 97% by mass or less, more preferably 90% by mass or less, and further preferably 85% by mass or less.

In the present invention, the polypropylene-based resin composition forming the core layer may contain propylene homopolymer. From the point of view of heat-sealing strength or bag breakage resistance, the content amount of propylene homopolymer in the polypropylene-based resin composition forming the core layer is preferably 60% by mass or less, more preferably 50% by mass or less, and further preferably 40% by mass or less.

In the present invention, the polypropylene-based resin composition forming the core layer may contain linear low-density polyethylene. Containing linear low-density polyethylene in the core layer improves the bending pinhole resistance. The content amount of linear low-density polyethylene in the core layer is preferably 3% by mass or more, more preferably 8% by mass or more, further preferably 12% by mass or more, and particularly preferably 15% by mass or more. From the point of view of heat resistance, the content amount of linear low-density polyethylene in the core layer is preferably 40% by mass or less, more preferably 35% by mass or less, further preferably 30% by mass or less, and particularly preferably 25% by mass or less.

< Laminate layer >

In the present invention, the polypropylene-based resin composition forming the laminate layer preferably contains a propylene-a olefin random copolymer. Containing propylene-a olefin random copolymer in the polypropylene-based resin composition forming the laminate layer can improve heat-sealing strength. The content amount of propylene-$\alpha$ olefin random copolymer in the polypropylene-based resin composition forming the laminate layer is preferably 20% by mass or more, more preferably 40% by mass or more, and further preferably 70% by mass or more. From the point of view of bending pinhole resistance, the content amount of propylene-$\alpha$ olefin random copolymer in the polypropylene-based resin composition forming the laminate layer is preferably 90% by mass or less, and more preferably 80% by mass or less.

In the present invention, the polypropylene-based resin composition forming the laminate layer may contain propylene homopolymer. From the point of view of heat-sealing strength or bag breakage resistance, the content amount of propylene homopolymer in the polypropylene-based resin composition forming the laminate layer is preferably 60% by mass or less, more preferably 50% by mass or less, and further preferably 40% by mass or less.

In the present invention, the polypropylene-based resin composition forming the laminate layer may contain linear low-density polyethylene. Containing linear low-density polyethylene in the laminate layer improves the bending pinhole resistance. The content amount of linear low-density polyethylene in the laminate layer is preferably 3% by weight or more, more preferably 8% by weight or more, further preferably 15% by weight or more, particularly preferably 20% by weight or more, and most preferably 25% by weight or more. From the point of view of heat resistance and heat-sealing strength, the content amount of linear low-density polyethylene in the laminate layer is preferably 50% by weight or less, more **preferably 40% by weight or less, and further preferably 30% by weight or less.**

In the **unstretched polyolefin film** of the present invention, a difference of a content between the linear low-density polyethylene in the sealing layer and the linear low-density polyethylene in the core layer is preferably 1% by mass or more and 28% by mass or less. A difference of a concentration between the linear low-density polyethylene in the sealing layer and the linear low-density polyethylene in the core layer is more preferably 1% by mass or more and 23% by mass or less, even more preferably 1% by mass or more and 18% by mass or less, and particularly preferably 1% by mass or more and 15% by mass or less. In a case where the difference of the content is 28% by mass or less, strength between the layers at an interface between the sealing layer and the core layer can be maintained high, and heat-sealing strength can be made high.

In the **unstretched polyolefin film** of the present invention, a difference of a content between the linear low-density polyethylene in the core layer and the linear low-density polyethylene in the **laminate** layer is preferably 1% by mass or more and 28% by mass or less. A difference of a concentration between the linear low-density polyethylene in the core layer and the linear low-density polyethylene in the **laminate** layer is more preferably 1% by mass or more and 23% by mass or less, even more preferably 1% by mass or more and 18% by mass or less, and particularly preferably 1% by mass or more and 15% by mass or less. In a case where the difference of the content is 28% by mass or less, strength between the layers at an interface between the core layer and the **laminate** layer can be maintained high, and heat-sealing strength can be made high.

In the **unstretched polyolefin film** of the present invention, the content of the linear low-density polyethylene in the core layer is preferably larger than the content of the sealing layer, and the content of the linear low-density polyethylene in the laminate layer is preferably larger than the content of the linear low-density polyethylene in the core layer. Thus, the linear low-density polyethylene in the film is likely to be uniformly dispersed, and bending pinhole resistance is advantageously good. Furthermore, since a proportion of polypropylene resin in resin near the heat-sealing surface is large, heat-sealing strength can be made high.

In a case where the propylene-$\alpha$-olefin random copolymer having a low melting point is used for the sealing layer, and the propylene-$\alpha$-olefin random copolymer having a high melting point is used for the core layer and the laminate layer, heat resistance and bending pinhole resistance can be further enhanced while more preferable heat-sealing strength is made high.

<Propylene-$\alpha$-olefin random copolymer>

In the present invention, Example of the propylene-$\alpha$-olefin random copolymer include at least one kind of copolymer of propylene **and an** $\alpha$-olefin in which the number of carbon atoms is 2 or 4 to 20 and which is different from propylene. **As the** $\alpha$-olefin monomer in which the number of carbon atoms is 2 or 4 to 20, ethylene, butene-1, pentene-1, 4-methylpentene-1, hexene-1, octene-1, or the like can be used.

For the propylene-$\alpha$-olefin random copolymer, ethylene preferably contains as the $\alpha$-olefin, from the viewpoint of heat-sealability. Furthermore, at least one kind of the propylene-$\alpha$-olefin random copolymer may be used, and two or more kinds of the propylene-$\alpha$-olefin random copolymers may be mixed and used as appropriate. A propylene-ethylene-butene random copolymer in which the main monomer is propylene and certain amounts of ethylene and butene are copolymerized, is particularly preferable.

The lower limit of a melt flow rate (MFR) of the propylene-$\alpha$-olefin random copolymer is preferably 0.6 g/10 min, more preferably 1.0g/10 min, and further preferably 1.2 g/10 min. The upper limit of the melt flow rate of the random copolymer is preferably 12.0 g/10 min, more preferably 9.0 g/10 min, and further preferably 8.0 g/10 min.

< Propylene homopolymer >

The melt flow rate (MFR) (measured at 230°C and a load of 2.16 kg) of the propylene homopolymer is, but is not particularly limited to, preferably 1.0 g/10 min or larger and 10.0 g/10 min or smaller, and more preferably 2.0 g/10 min or larger and 8.0 g/10 min or smaller. If the melt flow rate is smaller than 1.0 g/10 min, the viscosity is excessively high, and extrusion by a T-die may be difficult. Meanwhile, if the melt flow rate is larger than 10.0 g/10 min, the film may have poor stickiness and the film may have low impact resistance strength (impact strength). The propylene homopolymer is preferably isotactic polypropylene that has high crystallinity and can inhibit degradation of a heat shrinkage rate.

< Linear low-density polyethylene >

The linear low-density polyethylene can be, for example, produced by a production method such as a high-pressure method, a solution method, and a gas phase method. Examples of the linear low-density polyethylene include a copolymer of ethylene and at least **one kind of** $\alpha$-olefin in which the number of carbon atoms is not smaller than three. **The** $\alpha$-olefin in which the number of carbon atoms is not smaller than three may be propylene, butene-1, hexene-1, octene-1, or 4-methyl-1-pentene. Examples of the copolymer of ethylene and the $\alpha$-olefin include ethylene-hexene-1 copolymer, ethylene-butene-1 copolymer, and ethylene-octene-1 copolymer. From the viewpoint of bending pinhole resistance, an ethylene-hexene copolymer is preferable.

The linear low-density polyethylene may contain biomass-derived linear low-density polyethylene obtained by polymerizing ethylene derived from a plant such as sugar cane and ethylene derived from fossil fuel such as petroleum or a plant as a part of raw material. The biomass -derived linear low-density polyethylene has an effect of reducing generated carbon dioxide and can mitigate global warming from the viewpoint of carbon neutrality. When the biomass-derived linear low-density polyethylene contains ethylene derived from biomass, the content of the ethylene derived from biomass in the biomass-derived linear low-density polyethylene is preferably 50% by mass or more, and more preferably 80% by mass or more. In a case where the content of the ethylene derived from biomass in the biomass-derived linear low-density polyethylene is 50% by mass or more, a good effect of reducing carbon dioxide is exhibited. The upper limit is preferably 98% by mass, and more preferably 96% by mass. Since copolymerizing ethylene and $\alpha$-olefin other than ethylene is preferable from the viewpoint of bending pinhole resistance, the content of the ethylene derived from biomass in the biomass-derived linear low-density polyethylene is preferably 98% by mass or less.

The lower limit of the melt flow rate (measured at 190°C and 2.18 kg) of the linear low-density polyethylene is preferably 1.0 g/10 min and more preferably 2.0 g/10 min. The upper limit is preferably 7.0 g/min and more preferably 5.0 g/min. In a case where the melt flow rate is in the above-described range, compatibility with polypropylene resin is good, and sealing strength is made high.

The lower limit of the density of the linear low-density polyethylene is preferably 910 kg/m$^3$ and more preferably 913 kg/m$^3$. In a case where the lower limit is 910 kg/m$^3$ or larger, blocking resistance is made good. The upper limit is 935 kg/m$^3$ and more preferably 930 kg/m$^3$. In a case where the upper limit is 935 kg/m$^3$ or smaller, bag breakage resistance is made good.

<Additive>

The **unstretched polyolefin film** may contain other additives such as an anti-blocking agent, an antioxidant, an antistatic agent, an antifogging agent, a neutralizer, a nucleating agent, and a coloring agent, an inorganic filler, and the like in an appropriate amount in any layer as necessary without departing from the object of the present invention.

A polyolefin resin composition constituting the **unstretched polyolefin film** may contain an anti-blocking agent. One kind of anti-blocking agent may be contained. However, in a case where two or more kinds of inorganic particles having different particle diameters and shapes are blended, protrusions can be complicated on the unevenness on the film surface, and a blocking preventing effect can be further enhanced. The anti-blocking agent to be added is, but is not particularly limited to, inorganic particles such as spherical silica, amorphous silica, zeolite, talc, mica, alumina, hydrotalcite, and aluminum borate, and organic particles such as polymethyl methacrylate and ultrahigh molecular weight polyethylene.

An amount of the anti-blocking agent contained in the polypropylene resin composition constituting the **seal layer** is preferably 0.30 % by mass or less, and more preferably 0.25 % by mass or less, with respect to polyolefin resin in a layer to which the anti-blocking agent is added. In a case where the amount of the anti-blocking agent is 0.30 % by mass or less, dropping of the anti-blocking agent from the **seal layer** surface can be reduced. An amount of the anti-blocking agent contained in the polypropylene resin composition constituting the **seal layer** is preferably 0.05 % by mass or more, and more preferably 0.10 % by mass or more, with respect to polyolefin resin in a layer to which the anti-blocking agent is added. In a case where the amount of the anti-blocking agent is 0.05 % by mass or more, good anti-blocking can be obtained.

An amount of the anti-blocking agent contained in the polypropylene resin composition constituting the laminate layer is preferably 0.30 % by mass or less, more preferably 0.25 % by mass or less, even more preferably 0.10 % by mass or less, and particularly preferably 0.05 % by mass or less, with respect to polyolefin resin in a layer to which the anti-blocking agent is added. In a case where the amount of the anti-blocking agent is 0.30 % by mass or less, dropping of the anti-blocking agent from the laminate layer surface can be reduced.

The polyolefin resin composition constituting the **unstretched polyolefin film** may contain an organic lubricant. When the polyolefin resin composition constituting the **unstretched polyolefin film** contains an organic lubricant, slipperiness and a blocking preventing effect of the film are enhanced, and handleability of the film is made good. This is because bleed-out of the organic lubricant occurs, and the organic lubricant is on the film surface, so that the lubricant effect and a mold releasing effect are considered to be exhibited. The organic lubricant preferably has a melting point of not lower than an ordinary temperature. Examples of the organic lubricant include fatty acid amide and fatty acid ester. Specific examples of the organic lubricant include oleic acid amide, erucic acid amide, behenic acid amide, ethylene bis oleic acid amide, hexamethylene bis oleic acid amide, and ethylene bis oleic acid amide. Although one of them may be used solely, two or more kinds thereof are preferably used in combination since slipperiness and a blocking preventing effect can be maintained even in a severe environment. An amount of the organic lubricant in the polypropylene resin composition is preferably 0.15 % by mass or less, and more preferably 0.10 % by mass or less. In a case where the amount of the organic lubricant is 0.15 % by mass or less, blocking is unlikely to occur even in storage in a place such as a warehouse subjected to a high temperature in summer. An amount of the organic lubricant in the polypropylene resin composition is preferably 0.02 % by mass or more, and more preferably 0.025 % by mass or more. In a case where the amount of the organic lubricant is 0.02 % by mass or more, good slipperiness can be obtained.

The polyolefin-based resin composition forming the unstretched polyolefin film can contain an antioxidant. Examples of the antioxidant include a phenol-based antioxidant, a phosphite-based antioxidant, a combination of these, and an antioxidant having a phenol-based backbone and a phosphite-based backbone in one molecule. Examples of a neutralizer include calcium stearate.

[Unstretched polyolefin film]

The lower limit of the thickness of the unstretched polyolefin film of the sealant layer is preferably 15 μm, more preferably 20 μm, and further preferably 25 μm. When the thickness is 15 μm or more, heat-sealing strength and bag breakage resistance are easily obtained. The upper limit of the film thickness is preferably 80 μm, more preferably 70

μm, further preferably 60 μm, and particularly preferably 50 μm. When the film thickness is 80 μm or less, the film has appropriate stiffness, thus, is easily processed, and thus, is suitable for producing a packing bag.

The haze value of the unstretched polyolefin film is preferably 20% or less, more preferably 15% or less, and further preferably 10% or less. When the haze value is 20% or less, visibility of the packing body is easily obtained. Linear low-density polyethylene has high crystallinity and the haze easily increases, but when the addition amount is in the above preferable range, increase in haze is suppressed. The lower limit of the haze value is preferably 1% and more preferably 2%. When the haze value is 1% or more, the film surface is not in a state where the number of projections and recesses is extremely small, and thus, inner surface blocking of the packing body is less likely to occur.

The static friction coefficient of the unstretched polyolefin film is preferably 0.70 or less, more preferably 0.50 or less, and further preferably 0.40 or less. When the static friction coefficient is 0.70 or less, inner surfaces easily slip with each other when the packing body is filled with food or opened, whereby favorable openability is realized. The lower limit of the static friction coefficient is preferably 0.10 or more, more preferably 0.20 or more, and particularly preferably 0.30 or more. When the static friction coefficient is 0.10 or more, collapse of winding is less likely to occur when the film in a roll shape is transported.

Impact strength of the unstretched polyolefin film is preferably 0.20 J/15 μm or more, more preferably 0.25 J/15 μm or more, and further preferably 0.30 J/15 μm or more. When the impact strength is 0.20 J/15 μm or more, bag breakage resistance at the time of falling of the packing body can be increased. The upper limit of the impact strength is not limited in particular, and is preferably 1.0 J/15 μm or less. The impact strength significantly depends on the thickness and molecular orientation of the film. The impact strength and the bag breakage resistance at the time of falling do not necessarily correlate with each other.

Piercing strength of the unstretched polyolefin film is preferably 1.0 N/μm or more, more preferably 1.5 N/μm or more, and further preferably 1.7 N/μm or more. When the piercing strength is 1.0 N/μm or more, piercing pinhole resistance of the layered body becomes favorable.

The plane orientation coefficient of the unstretched polyolefin film is preferably 0.000 or more and more preferably 0.001 or more. The upper limit of the plane orientation of the film is preferably 0.010 or less, more preferably 0.008 or less, and further preferably 0.006 or less. When the plane orientation coefficient is 0.010 or less, a film having a uniform thickness can be obtained.

The heat-sealing start temperature of the unstretched polyolefin film is preferably 110°C or more and more preferably 120°C or more. When the heat-sealing start temperature is 110°C or more, the stiffness of the film is favorable for handling. The upper limit of the heat-sealing start temperature is 150°C, more preferably 140°C, and further preferably 130°C. When the heat-sealing start temperature is 150°C or less, the packing body can be produced at a high speed, and this is economically advantageous. The heat-sealing start temperature is significantly influenced by the melting point of the seal layer.

The wetting tension of the surface of the unstretched polyolefin film is preferably 30 mN/m or more and more preferably 35 mN/m or more. When the wetting tension is 30 mN/m or more, laminating strength is less likely to be reduced. The upper limit of the wetting tension is preferably 55 mN/m and more preferably 50 mN/m. When the wetting tension is 55 mN/m or less, blocking between films is less likely to occur when the polyolefin-based resin film is wound into a roll.

In the unstretched polyolefin film, the content, i.e., biomass degree, of carbon derived from biomass as measured with radiocarbon $^{14}$C according to ASTM D6866-18 is preferably 3% or more and 30% or less with respect to all carbons in the unstretched polyolefin film.


[Method for producing unstretched polyolefin film]

As a method for producing the unstretched polyolefin film of the present invention, an inflation method or a T-die method can be used, for example. In order to increase transparency, the T-die method is preferable. In the inflation method, the cooling medium is air. Meanwhile, the T-die method is a production method advantageous for increasing the cooling rate since a cooling roll is used. Transparency is advantageously good since crystallization of an unstretched sheet can be suppressed by increasing the cooling rate. For such a reason, a non-oriented sheet according to the T-die method is preferable.

Representative production examples will be described below. Each raw material of the polypropylene-based resin compositions for the seal layer, the core layer, and the laminate layer is mixed respectively, and then melt-mixed and extruded by different extruders, and the layered sheet of the seal layer, the core layer, and the laminate layer which have been melted is cast onto a cooling roll from the T-die, thereby obtaining a non-oriented sheet. The lower limit of the temperature of the cooling roll is preferably 15°C and more preferably 20°C. When the temperature is lower than the above-described temperature, moisture condensation is caused on the cooling roll, and adhesion may become insufficient. The upper limit of the cooling roll is preferably 60°C and more preferably 50°C. When the temperature exceeds the above-described temperature, transparency may be deteriorated.

[Layered film]

The layered film of the present invention has the base material layer and the sealant layer, but it is also possible to form a layered film in which an adhesive layer, a printed layer, a metal layer, etc., are interposed between the base material layer and the sealant layer. As a lamination method, a known method such as a dry lamination method and an extrusion lamination method can be used, and any of the lamination methods can be used. Specific examples are shown below.

Examples of the layer configuration of the laminated film of the present invention include for example: ONY/adhesive/CPP, ONY/adhesive/Al/adhesive/CPP, PET/adhesive/ONY/adhesive/CPP, PET/adhesive/ONY/adhesive/Al/adhesive/CPP, PET/adhesive/Al/adhesive/ONY/adhesive/CPP, ONY/adhesive/PET/adhesive/CPP, ONY/PE/CPP, ONY/adhesive/EVOH/adhesive/CPP, ONY/adhesive/ALUMINUM VAPOR DEPOSITION PET/adhesive/CPP, CPP/adhesive/ONY/adhesive/LLDPE, and ONY/adhesive/ALUMINUM VAPOR DEPOSITION CPP.

The abbreviations used in the above layer configurations are as follows.

**The layer boundary is expressed by "/".**

ONY: biaxially stretched polyamide film
PET: stretched polyethylene terephthalate film
LLDPE: linear low density polyethylene film
CPP: unstretched polypropylene film
PE: extrusion-laminated or unstretched low density polyethylene film
Al: aluminum foil
EVOH: ethylene-vinyl alcohol copolymer resin
adhesive: adhesive layer that adheres films together
ALUMINUM VAPOR DEPOSITION: indicating that aluminum is vapor-deposited.

[Characteristics of layered film]

Bending resistance of the layered film of the present invention can be measured by pinhole evaluation. The number of pinholes after bending the layered film 1000 times at 1°C is preferably 20 or less, further preferably 15 or less, and particularly preferably 10 or less. When the number of pinholes is 20 or less, pinholes are less likely to be generated due to bending impact when the packing bag is transported.

Piercing strength of the layered film of the present invention is preferably 10 N or more, more preferably 12 N or more, and further preferably 14 N or more. When the piercing strength is 10 N or more, pinholes are less likely to be generated when a protrusion comes into contact with the packing body.

Heat-sealing strength of the layered film of the present invention is preferably 20 N/15 mm or more, more preferably 25 N/15 mm or more, and further preferably 30 N/15 mm or more. When the heat-sealing strength is 20 N/15 mm or more, bag breakage resistance is easily obtained. The heat-sealing strength of 60 N/15 mm is very excellent, while the heat-sealing strength of 35 N/15 mm is sufficient.

In the layered film of the present invention, the content, i.e., biomass degree, of carbon derived from biomass as measured with radiocarbon $^{14}$C according to ASTM D6866-18 is preferably 2% or more and 30% or less with respect to all carbons in the layered film.

[Packing bag]

In a preferable embodiment, the layered film of the present invention is processed into a packing bag mainly intended to protect a content such as food or a beverage from dust, gases, or the like in nature. The packing bag is produced by, for example, adhering inner surfaces of the layered film to each other by a heated heat-sealing bar, an ultrasonic wave, or the like, into a bag-like shape. For example, two rectangular layered bodies are stacked such that the sealant layer sides are on the inner side, and the four sides are heat-sealed, whereby the layered bodies are processed into a four-side sealed bag. The layered film of the present invention can be processed into a packing bag such as a bottom sealed bag, a side sealed bag, a three-side sealed bag, a pillow bag, a standing pouch, a gazette bag, or a square bottom bag.

Bag breakage resistance at the time of falling of the packing body of the present invention is preferably 15 times or more, more preferably 20 times or more, and further preferably 22 times or more. When the bag breakage resistance at the time of falling is 15 times or more, the packing body is less likely to be broken when the packing body containing food is dropped. About 30 times is sufficient as the bag breakage resistance at the time of falling. The bag breakage resistance at the time of falling of the packing body is influenced by bending pinhole resistance, piercing strength, and heat-sealing strength of the layered body, and thus, these characteristics are preferably in the preferable ranges.

Examples

Evaluation of films was performed by the following measurement method. Unless otherwise specified, the measurement was performed in a measurement chamber having an environment at 23°C and a relative humidity of 65%.

(1) Thickness of film

Ten sheets of an obtained film were stacked with each other, cut so as to have a length of 100 mm in the longitudinal direction, and conditioned in an environment at a temperature of 23°C and a relative humidity of 65% for two hours or more. Then, at positions of ten equal parts (as for a narrow film, the film is cut into equal parts such that a width that allows measurement of a thickness can be ensured) obtained by cutting the film in the width direction, thicknesses were measured by using a thickness measurement device manufactured by TESTER SANGYO CO., LTD., and the value obtained by dividing the average value of the measurements by the number of sheets of the stacked film was used as the thickness of the film.
The thickness of the layer A in the biaxially stretched polyamide film was calculated based on the ratio of the discharge amounts of resins of the layer A and the layer B.

(2) Haze value

The haze value of the film was measured according to JIS K7105, using a direct reading haze meter manufactured by Toyo Seiki Seisaku-sho, Ltd.

(3) Biomass degree

The biomass degree of the film was measured with radiocarbon $^{14}$C as described in Method B (AMS) of ASTM D6866-18.

(4) Heat shrinkage rate

The heat shrinkage rate of the film was measured by the following equation according to the dimensional change test method described in JIS C2318, except that the test temperature was set to 160°C and the heating time was set to 10 minutes for each of the MD direction and the TD direction.

Heat shrinkage rate=[(length before treatment-length after treatment)/length before treatment]×100(%)

(5) Impact strength

The impact strength of the film was measured using a film impact tester manufactured by Toyo Seiki Seisaku-sho, Ltd. The measured value was converted into a value in terms of 15 $\mu$m thickness and represented in a unit of J/15 $\mu$m.

(6) Degree of plane orientation

A sample was taken from the center position in the width direction of the film. With respect to the sample, the refractive index (nx) in the MD direction of the film and the refractive index (ny) in the TD direction of the film were measured according to Method A of JIS K 7142-1996, with sodium D-rays as a light source and using an Abbe refractometer, and the degree of plane orientation was calculated by a calculation equation as equation (1).

$$\text{Equation (1): degree of plane orientation } (\Delta P)=(nx+ny)/2-nz$$

(7) Piercing strength

The piercing strength of the film was measured according to "2. Testing methods for strength, etc." in "Standards for Food, Additives, etc. Chapter III: Apparatus, Containers and Packaging" (Notification No. 20 of the Ministry of Health and Welfare, 1982) in the Food Sanitation Act. The film was pierced with a needle having a tip diameter of 0.7 mm at a piercing speed of 50 mm/minute, and the strength at which the needle penetrated the film was measured. The piercing strength was indicated in a unit of N. When the piercing strength is indicated in a unit of N/$\mu$m, a numerical value obtained by dividing the piercing strength (in a unit of N) of the film by the thickness (in a unit of $\mu$m) of the film was used as the piercing strength.

(8) Wetting tension

The wetting tension of the film surface was measured according to JIS-K6768 Plastics-Film and sheeting-Determination of wetting tension.

(9) Heat-sealing start temperature

With respect to the unstretched polyolefin film, the heat-sealing start temperature was measured according to JIS Z 1713-2009. At first, the film was cut into a rectangular test piece being 50 mm in the TD direction × 250 mm in the MD direction. Seal layer portions of two sheets of the test piece were stacked with each other, a heat gradient tester (heat-seal tester) manufactured by Toyo Seiki Seisaku-sho, Ltd. was used, and the heat-sealing pressure was set to 0.2 MPa and the heat-sealing time was set to 1.0 sec. Then, heat-sealing was performed under a condition in which the temperature was incremented at a gradient of 5°C. After the heat-sealing, the test pieces were cut out so as to have a width of 15 mm. The test pieces fused by the heat-sealing were opened by 180°, an unsealed portion was held by a chuck, and the sealed portions were peeled off. The temperature at the time point when the heat-sealing strength reached 4.9 N was obtained. A universal material tester 5965 manufactured by Instron Instruments was used as a tester. The testing speed was set to 200 mm/min. The measurement was performed with N=5, and the average value was calculated.

(10) Heat-sealing strength

The heat-sealing strength was measured according to JIS Z1707. A specific procedure will be shown. Two layered films were used and seal layers of the unstretched polyolefin films were adhered by a heat sealer. The heat-sealing condition was set such that the upper bar temperature was 120°C, the lower bar temperature was 30°C, the pressure was 0.2 MPa, and the duration was two seconds. An adhesion sample was cut out so as to have a seal width of 15 mm. The peel strength was measured at a tensile speed of 200 mm/minute using a tensile tester "AGS-KNX" (manufactured by SHIMADZU CORPORATION). The peel strength is indicated in terms of strength per 15 mm, i.e., in a unit of N/15 mm.

(11) Bending pinhole resistance

The layered film was cut out so as to have dimensions of 280 mm in the MD direction and 260 mm in the TD direction. The cut-out layered film was formed into a cylindrical shape having φ89 mm and a height of 260 mm such that the unstretched polyolefin film was on the inner side, and was fixed with cellophane tape. The sample was attached to a thermostat bath-equipped Gelbo Flex tester manufactured by TESTER SANGYO CO., LTD., and a bending load was applied 1000 times at 1°C. The sample was detached, and the number of pinholes was measured.
The measurement of the number of pinholes was performed according to the following method. The sample was placed on a filter paper (manufactured by Advantech Co., Ltd., No. 50) with the unstretched polyolefin film side being a lower surface, and the four corners thereof were fixed with Sellotape (registered trademark). Ink (ink manufactured by PILOT corporation (product number: INK-350-blue) diluted 5-fold with pure water) was applied on the test film and spread all over the surface of the test film using a rubber roller. After wiping off unnecessary ink, the test film was removed, and the number of ink dots on the filter paper was measured. The measurement was performed with N=3, and the average value was calculated.

(12) Bag breakage resistance at the time of falling

Using the layered film, a four-side sealed bag having a longitudinal dimension of 170 mm and a lateral dimension of 120 mm as the internal dimensions was produced such that 200 ml of saturated saline was enclosed. In this case, the heat-sealing condition was set such that the pressure was 0.2 MPa, the duration was one second, the width of the seal bar was 10 mm, and the heat-sealing temperature was 160°C. After the process of producing the bag, end portions of the four-side sealed bag were cut such that the seal width was 5 mm. Next, the obtained product was left as it was in an environment of +5°C for eight hours. In this environment, the four-side sealed bag was dropped from a height of 1.2 m onto a flat concrete floor such that the surface was level. The bag was repeatedly dropped until the bag was broken, and the number of times of the repeated dropping was measured. This was repeated for 20 samples, and the average value was calculated.

[Manufacturing Example 1]

< Biaxially stretched polyamide film: Manufacturing of ONY>

(ONY1)

Using a device including two extruders and a co-extruding T-die having a width of 380 mm, lamination was performed in layer B/layer A/layer B configuration by a feed block method, and melted resins were extruded from the T-die into a film shape, and were cast and electrostatically adhered to a cooling roll adjusted to 20°C, to obtain an unstretched film having a **thickness of 200 μm.**
The resin compositions for layer A and layer B are as follows.

Layer A:

97 parts by mass of polyamide 6 (manufactured by Toyobo Co., Ltd., relative viscosity: 2.8, melting point: 220°C); and 3.0 parts by mass of polyamide 11 (manufactured by Zig Sheng Industrial Co. Ltd., relative viscosity: 2.5, melting point: 186°C)

Layer B:

95 parts by mass of polyamide 6 (manufactured by Toyobo Co., Ltd., relative viscosity: 2.8, melting point: 220°C); 5.0 parts by mass of polyamide MXD6 (manufactured by MITSUBISHI GAS CHEMICAL COMPANY, INC., relative viscosity: 2.1, melting point: 237°C); **0.54** parts by mass of porous silica fine particles (manufactured by Fuji Silysia **Chemical Ltd., average particle diameter: 2.0 μm, pore volume: 1.6 ml/g); and** 0.15 parts by mass of a fatty acid bisamide (ethylene bis stearamide manufactured by Kyoeisha Chemical Co., Ltd.).

The structure of the feed block and the discharge quantities of the extruders were **adjusted such that the biaxially stretched polyamide film had a total thickness of 15 μm, layer A had a thickness of 12 μm, and layer B on both sides of layer A had a thickness of 1.5 μm each.**
The obtained unstretched film was guided to a roll-type stretching machine. The unstretched film was stretched 1.73 times at 80°C in the MD direction and then further stretched 1.85 times at 70°C in the MD direction utilizing the difference between the circumferential speeds of rollers. Subsequently, this uniaxially stretched film was guided continuously to a tenter-type stretching machine and preheated at 110°C. Then, the uniaxially stretched film was stretched 1.2 times at 120°C, 1.7 times at 130°C, and 2.0 times at 160°C in the TD direction, and subjected to a heat setting treatment at 218°C and then a 7% relaxation treatment at 218°C. Then, corona discharge treatment was performed on the surface on the side on which the **sealant layer** was to be dry-laminated, to obtain a biaxially stretched polyamide film. The evaluation results of the obtained biaxially stretched polyamide film are shown in Table 1.

[ONY2 to ONY13]

Biaxially stretched polyamide films were obtained in the same manner as ONY1 except that the raw resin compositions for layer A and layer B and the film formation conditions such as the heat-setting temperature were changed as in Table 1. The evaluation results of the obtained biaxially stretched **polyamide** films are shown in Table 2. However, in ONY14, since melted resins were not stably extruded from the T-die into a film shape and **a homogeneous unstretched film was not obtained,** biaxially stretching could not be performed.
In addition, as a **polyamide resin in which at least a part of a raw material thereof is derived from biomass,** the following polyamide 410, the following polyamide 610, and the following polyamide 1010 were used.

- Polyamide 410: (ECOPaXX Q150-E, manufactured by DSM, melting point: 250°C)
- Polyamide 610: (RilsanS SMNO, manufactured by Arkema, melting point: 222°C)

- Polyamide 1010: (RilsanT TMNO, manufactured by Arkema, melting point: 202°C)

[Table 1A]

| | | | ONY1 | ONY2 | ONY3 | ONY4 | ONY5 |
|---|---|---|---|---|---|---|---|
| Layer A composition | Polyamide 6 | part by mass | 94 | 92 | 90 | 85 | 75 |
| | Polyamide 11 | part by mass | 6 | 8 | 10 | 15 | 25 |
| | Polyamide 410 | part by mass | - | - | - | - | - |
| | Polyamide 610 | part by mass | - | - | - | - | - |
| | Polyamide 1010 | part by mass | - | - | - | - | - |
| Layer B composition | Polyamide 6 | part by mass | 95 | 95 | 97 | 95 | 95 |
| | Polyamide MXD6 | part by mass | 5 | 5 | 3 | 5 | 5 |
| | Fine particle | part by mass | 0.54 | 0.54 | 0.54 | 0.54 | 0.54 |
| | Fatty acid amide | part by mass | 0.15 | 0.15 | 0.15 | 0.15 | 0.15 |
| Total thickness | | μm | 15 | 15 | 15 | 15 | 15 |
| Layer A thickness | | μm | 12 | 12 | 12 | 12 | 12 |
| Laminated resin configuration | | - | B/A/B | B/A/B | B/A/B | B/A/B | B/A/B |
| MD stretching temperature | | °C | 80 | 80 | 80 | 80 | 80 |
| MD stretch ratio | | times | 3.2 | 3.2 | 3.2 | 3.2 | 3.2 |
| TD stretching temperature | | °C | 130 | 130 | 130 | 130 | 130 |
| TD stretch ratio | | times | 4.0 | 4.0 | 4.0 | 4.0 | 4.0 |
| TD heat-setting temperature | | °C | 218 | 218 | 218 | 218 | 218 |
| TD relaxation temperature | | °C | 218 | 218 | 218 | 218 | 218 |
| TD relaxation rate | | % | 7 | 7 | 7 | 7 | 7 |
| Biomass degree | | % | 4.3 | 5.8 | 7.2 | 10.8 | 18.0 |
| Haze | | % | 2.5 | 2.7 | 2.9 | 3.2 | 4.9 |
| Impact strength | | J/15μm | 1.2 | 1.2 | 1.2 | 1.2 | 1.1 |
| Heat shrinkage rate | MD direction | % | 0.9 | 1.0 | 0.9 | 1.0 | 1.2 |
| | TD direction | % | 0.9 | 1.0 | 1.1 | 1.3 | 1.3 |

[Table 1B]

| | | | ONY6 | ONY7 | ONY8 | ONY9 | ONY10 |
|---|---|---|---|---|---|---|---|
| Layer A composition | Polyamide 6 | part by mass | 94 | 94 | 85 | 85 | 85 |
| | Polyamide 11 | part by mass | 6 | 6 | - | - | - |
| | Polyamide 410 | part by mass | - | - | 15 | - | - |
| | Polyamide 610 | part by mass | - | - | - | 15 | - |
| | Polyamide 1010 | part by mass | - | - | - | - | 15 |
| Layer B composition | Polyamide 6 | part by mass | 90 | 100 | 95 | 95 | 95 |
| | Polyamide MXD6 | part by mass | 10 | - | 5 | 5 | 5 |
| | Fine particle | part by mass | 0.54 | 0.65 | 0.54 | 0.54 | 0.54 |
| | Fatty acid amide | part by mass | 0.15 | 0.20 | 0.15 | 0.15 | 0.15 |

(continued)

| | | | ONY6 | ONY7 | ONY8 | ONY9 | ONY10 |
|---|---|---|---|---|---|---|---|
| Total thickness | | μm | 15 | 15 | 15 | 15 | 15 |
| Layer A thickness | | μm | 13 | 13 | 12 | 12 | 12 |
| Laminated resin configuration | | - | B/A/B | B/A/B | B/A/B | B/A/B | B/A/B |
| MD stretching temperature | | °C | 80 | 80 | 80 | 80 | 80 |
| MD stretch ratio | | times | 3.2 | 3.2 | 3.2 | 3.2 | 3.2 |
| TD stretching temperature | | °C | 130 | 130 | 130 | 130 | 130 |
| TD stretch ratio | | times | 3.8 | 3.8 | 4.0 | 4.0 | 4.0 |
| TD heat-setting temperature | | °C | 218 | 218 | 218 | 218 | 218 |
| TD relaxation temperature | | °C | 218 | 218 | 218 | 218 | 218 |
| TD relaxation rate | | % | 7 | 7 | 7 | 7 | 7 |
| Biomass degree | | % | 4.7 | 4.7 | 10.6 | 10.9 | 10.7 |
| Haze | | % | 3.0 | 3.8 | 3.5 | 3.3 | 3.4 |
| Impact strength | | J/15μm | 1.2 | 1.2 | 1.2 | 1.2 | 1.2 |
| Heat shrinkage rate | MD direction | % | 0.9 | 0.9 | 1.2 | 1.3 | 1.4 |
| | TD direction | % | 1.0 | 1.0 | 1.4 | 1.5 | 1.5 |

[Table 1C]

| | | | ONY11 | ONY12 | ONY13 | ONY14 | ONY15 | ONY16 |
|---|---|---|---|---|---|---|---|---|
| Layer A composition | Polyamide 6 | part by mass | 100 | 100 | 99.5 | 65 | 94 | 94 |
| | Polyamide 11 | part by mass | - | - | 0.5 | 35 | 6 | 6 |
| | Polyamide 410 | part by mass | - | - | - | - | - | - |
| | Polyamide 610 | part by mass | - | - | - | - | - | - |
| | Polyamide 1010 | part by mass | - | - | - | - | - | - |
| Layer B composition | Polyamide 6 | part by mass | 100 | 100 | 95 | 95 | 95 | 75 |
| | Polyamide MXD6 | part by mass | - | - | 5 | 5 | 5 | 25 |
| | Fine particle | part by mass | 0.54 | 0.54 | 0.54 | 0.54 | 0.54 | 0.54 |
| | Fatty acid amide | part by mass | 0.15 | 0.15 | 0.15 | 0.15 | 0.15 | 0.15 |
| Total thickness | | μm | 15 | 15 | 15 | 15 | 15 | 15 |
| Layer A thickness | | μm | 12 | 12 | 12 | 12 | 5 | 12 |
| Laminated resin configuration | | - | B/A/B | B/A/B | B/A/B | B/A/B | B/A/B | B/A/B |
| MD stretching temperature | | °C | 80 | 80 | 80 | 80 | 80 | 80 |

(continued)

| | | | ONY11 | ONY12 | ONY13 | ONY14 | ONY15 | ONY16 |
|---|---|---|---|---|---|---|---|---|
| MD stretch ratio | | times | 3.2 | 3.2 | 3.2 | 3.2 | 3.2 | 3.2 |
| TD stretching temperature | | °C | 130 | 130 | 130 | 130 | 130 | 130 |
| TD stretch ratio | | times | 4.0 | 4.0 | 4.0 | 4.0 | 4.0 | 4.0 |
| TD heat-setting temperature | | °C | 218 | 210 | 218 | 218 | 218 | 218 |
| TD relaxation temperature | | °C | 218 | 210 | 218 | 218 | 218 | 218 |
| TD relaxation rate | | % | 7 | 7 | 7 | 7 | 7 | 7 |
| Biomass degree | | % | 0.0 | 0.0 | 0.4 | 25.2 | 1.8 | 4.3 |
| Haze | | % | 2.2 | 2.3 | 2.3 | - | 3.0 | 2.9 |
| Impact strength | | J/15μm | 0.9 | 1.2 | 1.0 | - | 1.2 | 1.1 |
| Heat shrinkage rate | MD direction | % | 0.8 | 1.3 | 0.7 | - | 1.0 | 0.9 |
| | TD direction | % | 0.7 | 1.4 | 0.9 | - | 0.9 | 1.0 |

(Manufacturing Example 2)

<Unstretched polyolefin film: manufacturing of CPP>

(CPP1)

Materials were adjusted according to the resin compositions and the proportions thereof for each layer as indicated below in Table 2. To the sealing layer, 360 ppm of behenic acid amide as an organic lubricant, and 2000 ppm of silica, as an inorganic anti-blocking agent, **having an average particle diameter of 4 μm were added as masterbatch with the adjusted** products in the layers indicated in Table 2 being 100 parts by weight. To the core layer, 2700 ppm of behenic acid amide as an organic lubricant was added as masterbatch.

(Materials used for the sealing layer)

PP-1: propylene-ethylene-butene random copolymer FL6745A (MFR of 6.0 g/10 min, a melting point of 130°C) manufactured by SUMITOMO CHEMICAL COMPANY, LIMITED
LL-1: ethylene-hexene copolymer (plant-derived linear low-density polyethylene) SLH218 (MFR of 2.3 g/min, a density of 916 kg/m$^3$, a melting point of 126°C) manufactured by Braskem
Silica particles: amorphous silica KMP130-4 **(average particle diameter of 4 μm)** manufactured by **Shin-Etsu Chemical Co., Ltd.**
Organic lubricant: behenic acid amide BNT-22H manufactured by NIPPON FINE CHEMICAL CO., LTD.

(Materials used for the core layer)

PP-2: propylene-ethylene-butene random copolymer FL8115A (MFR of 7.0 g/10 min, a melting point of 148°C) manufactured by SUMITOMO CHEMICAL COMPANY, LIMITED
PP-3: propylene homopolymer FLX80E4 (MFR of 7.5 g/10 min, a melting point of 164°C) manufactured by SUMITOMO CHEMICAL COMPANY, LIMITED
LL-1: ethylene-hexene copolymer (plant-derived linear low-density polyethylene) SLH218 (MFR of 2.3 g/min, a density of 916 kg/m$^3$, a melting point of 126°C) manufactured by Braskem

LL-2: ethylene-hexene copolymer (fossil fuel-derived linear low-density polyethylene) FV405 (MFR of 4.0 g/min, a density of 923 kg/m$^3$, a melting point of 118°C) manufactured by SUMITOMO CHEMICAL COMPANY, LIMITED

LDPE-1: ethylene-hexene copolymer (plant-derived low density polyethylene) SLH818 (MFR of 8.1 g/min, a density of 918 kg/m$^3$) manufactured by Braskem

Organic lubricant: behenic acid amide BNT-22H manufactured by NIPPON FINE CHEMICAL CO., LTD.

(Materials used for the laminate layer)

PP-2: propylene-ethylene-butene random copolymer FL8115A (MFR of 7.0 g/10 min, a melting point of 148°C) manufactured by SUMITOMO CHEMICAL COMPANY, LIMITED

PP-3: propylene homopolymer FLX80E4 (MFR of 7.5 g/10 min, a melting point of 164°C) manufactured by SUMITOMO CHEMICAL COMPANY, LIMITED

LL-1: ethylene-hexene copolymer (plant-derived linear low-density polyethylene) SLH218 (MFR of 2.3 g/min, a density of 916 kg/m$^3$, a melting point of 126°C) manufactured by Braskem

LL-2: ethylene-hexene copolymer (fossil fuel-derived linear low-density polyethylene) FV405 (MFR of 4.0 g/min, a density of 923 kg/m$^3$, a melting point of 118°C) manufactured by SUMITOMO CHEMICAL COMPANY, LIMITED

LDPE-1: ethylene-hexene copolymer (plant-derived low density polyethylene) SLH818 (MFR of 8.1 g/min, a density of 918 kg/m$^3$) manufactured by Braskem

These materials were mixed so as to be uniform at the proportions indicated in Table 2, and the mixed material for producing an unstretched polyolefin film were obtained.

The mixed material used for the core layer was introduced by a three-stage-type single-screw extruder having a screw diameter of 90 mm, and the mixed material for the seal layer and the mixed material for the laminate layer were introduced by using a three-stage-type single screw extruder having a diameter of 65 mm and a three-stage-type single screw extruder having a diameter of 45 mm, respectively, such that the order was an order of the **seal layer**/the **core layer** /the **laminate layer.** The obtained product was extruded at a die outlet temperature of 230°C using T-slot type die. The thickness proportions of the **seal layer**/the **core layer** /the **laminate layer** were 25%/50%/25%, respectively.

The melted resin sheet discharged from the die was cooled by a cooling roll set at **35°C, and an unstretched polyolefin film having a thickness of 30 μm was obtained. When the** melted resin sheet was cooled by the cooling roll, both ends of the film on the cooling roll were fixed by an air nozzle, the entire width of the melted resin sheet was pressed against the cooling roll by air knife, and a vacuum chamber was simultaneously caused to act, whereby air was prevented from being entrained into between the melted resin sheet and the cooling roll. Both ends of the air nozzle were disposed in series with the film traveling direction. A portion around the die was surrounded by a sheet to prevent wind from hitting on the melted resin sheet. A direction of the suction port of the vacuum chamber was aligned with a traveling direction of the extruded sheet.

The surface of the laminate layer of the film was subjected to corona treatment **(power density of 20 W·min/m$^2$).** The film production speed was set as 20 m/min. The ear portion of the produced film was trimmed and the film was wound into a roll.

**(CPP2 to CPP14)**

**An unstretched polyolefin film having thicknesses shown in Table 2** was obtained in the same method as CPP1 except that **using the raw materials shown in Table 2. However, in CPP12, an unstretched polyolefin film having a single layer of 30 μm was obtained in the same** same method as CPP1 except that **using the raw materials shown in Table 2 and using an extruder for only the core layer.**

The evaluation results of CPP1 to CPP14 **films** are indicated in Table 2.

[Table 2A]

|  |  |  | CPP1 | CPP2 | CPP3 | CPP4 | CPP5 |
|---|---|---|---|---|---|---|---|
| Seal layer | PP-1 | part by mass | 100 | 100 | 100 | 100 | 100 |
|  | LL-1 | part by mass | 0 | 0 | 0 | 0 | 0 |
|  | Organic lubricant | part by mass | 0.036 | 0.036 | 0.036 | 0.036 | 0.036 |
|  | Silica particle | part by mass | 0.20 | 0.20 | 0.20 | 0.20 | 0.20 |

(continued)

| | | | CPP1 | CPP2 | CPP3 | CPP4 | CPP5 |
|---|---|---|---|---|---|---|---|
| Core layer | PP-2 | part by mass | 86 | 86 | 86 | 82 | 95 |
| | PP-3 | part by mass | 0 | 0 | 0 | 0 | 0 |
| | LL-1 | part by mass | 14 | 14 | 14 | 18 | 5 |
| | LL-2 | part by mass | 0 | 0 | 0 | 0 | 0 |
| | LDPE-1 | part by mass | 0 | 0 | 0 | 0 | 0 |
| | Organic lubricant | part by mass | 0.027 | 0.027 | 0.027 | 0.027 | 0.027 |
| Laminate layer | PP-2 | part by mass | 78 | 78 | 70 | 64 | 88 |
| | PP-3 | part by mass | 0 | 0 | 0 | 0 | 0 |
| | LL-1 | part by mass | 22 | 22 | 30 | 36 | 12 |
| | LL-2 | part by mass | 0 | 0 | 0 | 0 | 0 |
| | LDPE-1 | part by mass | 0 | 0 | 0 | 0 | 0 |
| Thickness | | μm | 30 | 60 | 30 | 30 | 30 |
| Thickness ratio | Seal layer | % | 25 | 25 | 25 | 25 | 25 |
| | Core layer | % | 50 | 50 | 50 | 50 | 50 |
| | Laminate layer | % | 25 | 25 | 25 | 25 | 25 |
| Content of LLDPE | | % by mass | 12.5 | 12.5 | 14.5 | 18.0 | 5.5 |
| Biomass degree | | % | 12.5 | 12.5 | 14.5 | 18 | 5.5 |
| Haze | | % | 4.3 | 6.2 | 4.2 | 4.2 | 4.3 |
| Degree of plane orientation | | - | 0.002 | 0.003 | 0.002 | 0.002 | 0.002 |
| Wetting tension | | mN/m | 43 | 43 | 43 | 43 | 43 |
| Impact strength | | J/15μm | 0.38 | 0.71 | 0.39 | 0.41 | 0.31 |
| Piercing strength | | N/μm | 1.9 | 2.4 | 1.9 | 2.0 | 1.8 |
| Sealing start temperature | | °C | 126 | 131 | 126 | 126 | 126 |

[Table 2B]

| | | | CPP6 | CPP7 | CPP8 | CPP9 | CPP10 |
|---|---|---|---|---|---|---|---|
| Seal layer | PP-1 | part by mass | 100 | 100 | 100 | 100 | 100 |
| | LL-1 | part by mass | 0 | 0 | 0 | 0 | 0 |
| | Organic lubricant | part by mass | 0.036 | 0.036 | 0.036 | 0.036 | 0.036 |
| | Silica particle | part by mass | 0.20 | 0.20 | 0.20 | 0.20 | 0.20 |
| Core layer | PP-2 | part by mass | 86 | 30 | 0 | 80 | 80 |
| | PP-3 | part by mass | 0 | 56 | 0 | 0 | 0 |
| | LL-1 | part by mass | 0 | 14 | 0 | 20 | 10 |
| | LL-2 | part by mass | 14 | 0 | 0 | 0 | 10 |
| | LDPE-1 | part by mass | 0 | 0 | 0 | 0 | 0 |
| | Organic lubricant | part by mass | 0.027 | 0.027 | 0.027 | 0.027 | 0.027 |

(continued)

| | | | CPP6 | CPP7 | CPP8 | CPP9 | CPP10 |
|---|---|---|---|---|---|---|---|
| Laminate layer | PP-2 | part by mass | 78 | 20 | 0 | 100 | 100 |
| | PP-3 | part by mass | 0 | 60 | 0 | 0 | 0 |
| | LL-1 | part by mass | 0 | 22 | 0 | 0 | 0 |
| | LL-2 | part by mass | 22 | 0 | 0 | 0 | 0 |
| | LDPE-1 | part by mass | 0 | 0 | 0 | 0 | 0 |
| Thickness | | $\mu$m | 30 | 30 | 30 | 30 | 30 |
| Thickness ratio | Seal layer | % | 25 | 25 | 25 | 25 | 16 |
| | Core layer | % | 50 | 50 | 50 | 50 | 60 |
| | Laminate layer | % | 25 | 25 | 25 | 25 | 23 |
| Content of LLDPE | | % by mass | 12.5 | 12.5 | 0.0 | 10.0 | 12.0 |
| Biomass degree | | % | 12.5 | 12.5 | 0.0 | 10 | 12.0 |
| Haze | | % | 4.1 | 3.1 | 4.0 | 4.2 | 4.0 |
| Degree of plane orientation | | - | 0.003 | 0.004 | 0.003 | 0.003 | 0.002 |
| Wetting tension | | mN/m | 43 | 43 | 43 | 43 | 43 |
| Impact strength | | J/15$\mu$m | 0.31 | 0.33 | 0.35 | 0.33 | 0.31 |
| Piercing strength | | N/$\mu$m | 1.9 | 2.0 | 1.7 | 1.8 | 1.9 |
| Sealing start temperature | | °C | 125 | 138 | 126 | 126 | 126 |

[Table 2C]

| | | | CPP11 | CPP12 | CPP13 | CPP14 |
|---|---|---|---|---|---|---|
| Seal layer | PP-1 | part by mass | 90 | - | 100 | 100 |
| | LL-1 | part by mass | 5 | - | 0 | 0 |
| | Organic lubricant | part by mass | 0.036 | - | 0 | 0.036 |
| | Silica particle | part by mass | 0.20 | - | 0.50 | 0.20 |
| Core layer | PP-2 | part by mass | 85 | 85 | 0 | 86 |
| | PP-3 | part by mass | 0 | 0 | 85 | 0 |
| | LL-1 | part by mass | 15 | 0 | 15 | 0 |
| | LL-2 | part by mass | 0 | 15 | 0 | 0 |
| | LDPE-1 | part by mass | 0 | 0 | 0 | 14 |
| | Organic lubricant | part by mass | 0.027 | 0.027 | 0.027 | 0.027 |
| Laminate layer | PP-2 | part by mass | 70 | - | 100 | 78 |
| | PP-3 | part by mass | 0 | - | 0 | 0 |
| | LL-1 | part by mass | 20 | - | 0 | 0 |
| | LL-2 | part by mass | 0 | - | 0 | 0 |
| | LDPE-1 | part by mass | 0 | 0 | 0 | 22 |
| Thickness | | $\mu$m | 30 | 30 | 30 | 30 |

(continued)

| Thickness ratio | | | CPP11 | CPP12 | CPP13 | CPP14 |
|---|---|---|---|---|---|---|
| Thickness ratio | Seal layer | % | 25 | single layer | 10 | 25 |
| Thickness ratio | Core layer | % | 50 | single layer | 84 | 50 |
| Thickness ratio | Laminate layer | % | 25 | single layer | 6 | 25 |
| Content of LLDPE | | % by mass | 12.5 | 15.5 | 12.3 | 15.0 |
| Biomass degree | | % | 12.5 | 15.5 | 12.3 | 15 |
| Haze | | % | 4.3 | 2.8 | 4.2 | 3.8 |
| Degree of plane orientation | | - | 0.002 | 0.002 | 0.003 | 0.003 |
| Wetting tension | | mN/m | 43 | 43 | 43 | 43 |
| Impact strength | | J/15μm | 0.33 | 0.35 | 0.35 | 0.33 |
| Piercing strength | | N/μm | 1.9 | 2.0 | 1.6 | 1.8 |
| Sealing start temperature | | °C | 124 | 125 | 125 | 123 |

**[Examples and Comparative Examples]**

(Production of the **layered film**)

The biaxially oriented polyamide film obtained in the manufacturing example 1 and the unstretched polyolefin film obtained in the manufacturing example 2 were dry-laminated by applying, to the biaxially oriented polyamide film, an ester adhesive applied to the biaxially oriented polyamide film such that an application amount **of the** ester-based adhesive was 3.0g/m². The ester-based adhesive was obtained by mixing 33.6 parts by mass of a main agent (TM569 manufactured by **Toyo-Morton, Ltd.**), 4.0 parts by mass of a curing agent (CAT10L manufactured by Toyo-Morton, Ltd.), and 62.4 parts by mass of ethyl acetate. The obtained product was wound and maintained at 40°C, and was subjected to aging for three days, to obtain **the layered film. The layered film was evaluated.**
A **layered film** was produced from combinations of the biaxially oriented polyamide film and the unstretched polyolefin film as shown in Table 3, and the **layered film was evaluated.** The results are indicated in Table 3.

[Table 3]

| | Biaxially stretched polyamide film | Unstretched polyolefin film | Biomass degree | Heat-sealing strength | Bending pinhole resistanc e | Bag breakage resistance at the time of falling |
|---|---|---|---|---|---|---|
| | | | % | N/15mm | piece | times |
| Example 1 | ONY1 | CPP1 | 10 | 31 | 3 | 23 |
| Example 2 | ONY2 | CPP1 | 10 | 32 | 3 | 25 |
| Example 3 | ONY3 | CPP1 | 11 | 33 | 5 | 23 |
| Example 4 | ONY4 | CPP1 | 12 | 34 | 4 | 24 |
| Example 5 | ONY5 | CPP1 | 14 | 33 | 4 | 23 |
| Example 6 | ONY6 | CPP1 | 10 | 31 | 3 | 27 |
| Example 7 | ONY7 | CPP1 | 10 | 32 | 4 | 25 |
| Example 8 | ONY8 | CPP1 | 12 | 32 | 5 | 23 |
| Example 9 | ONY9 | CPP1 | 12 | 32 | 5 | 23 |
| Example 10 | ONY2 | CPP2 | 12 | 34 | 3 | 35 |
| Example 11 | ONY2 | CPP3 | 12 | 29 | 3 | 28 |
| Example 12 | ONY2 | CPP4 | 14 | 23 | 2 | 39 |

(continued)

| | Biaxially stretched polyamide film | Unstretched polyolefin film | Biomass degree | Heat-sealing strength | Bending pinhole resistanc e | Bag breakage resistance at the time of falling |
|---|---|---|---|---|---|---|
| | | | % | N/15mm | piece | times |
| Example 13 | ONY2 | CPP5 | 6 | 32 | 3 | 24 |
| Example 14 | ONY2 | CPP6 | 10 | 33 | 4 | 24 |
| Example 15 | ONY2 | CPP7 | 10 | 35 | 3 | 25 |
| Comparative Example 1 | ONY11 | CPP1 | 8 | 33 | 20 | 16 |
| Comparative Example 2 | ONY12 | CPP1 | 8 | 30 | 12 | 18 |
| Comparative Example 3 | ONY13 | CPP1 | 8 | 31 | 18 | 18 |
| Comparative Example 4 | ONY15 | CPP1 | 17 | 31 | 15 | 18 |
| Comparative Example 5 | ONY16 | CPP1 | 9 | 32 | 20 | 18 |
| Comparative Example 6 | ONY2 | CPP8 | 2 | 35 | 10 | 6 |
| Comparative Example 7 | ONY2 | CPP9 | 9 | 18 | 3 | 17 |
| Comparative Example 8 | ONY2 | CPP10 | 10 | 18 | 4 | 17 |
| Comparative Example 9 | ONY2 | CPP11 | 10 | 15 | 3 | 15 |
| Comparative Example 10 | ONY2 | CPP12 | 12 | 17 | 3 | 12 |
| Comparative Example 11 | ONY2 | CPP13 | 10 | 31 | 10 | 14 |
| Comparative Example 12 | ONY2 | CPP14 | 12 | 7 | 3 | 8 |

**As shown in Table 3, the laminated films in the examples showed good heat-sealing strength,** bending pinhole resistance, **and bag breakage resistance at the time of falling, despite high biomass degree.**

On the other hand, the laminate films of Comparative Examples 1 and 2 made from biaxially oriented polyamide films without materials modifying bending pinhole resistance and the biaxially oriented polyamide film of Comparative Example 3 with too little polyamide 11 content had inferior bending pinhole resistance.

In Comparative Example 4, since the thickness of Layer A and thickness ratio of Layer A were small, bending pinhole resistance was poor.

In Comparative Example 5, since the amount of polyamide MXD6 in layer B was large and the amount of polyamide 6 resin in layer B was small, bending pinhole resistance was poor.

In Comparative example 6, since the linear low-density polyethylene was not added to the core layer and the laminate layer, bending pinhole resistance was poor.

In Comparative example 7 and Comparative example 8, since a difference of a content between the linear low-density polyethylene of the sealing layer and the linear low-density polyethylene of the core layer was large, heat-sealing strength was poor.

In Comparative example 9, since a content of the linear low-density polyethylene in the sealing layer was large, heat-sealing strength was poor.

In Comparative example 10, since a content of the linear low-density polyethylene was large over the entire region of the film, a content of the linear low-density polyethylene was large near the film surface and heat-sealing strength was poor.

In Comparative example 11, although the core layer contained the linear low-density polyethylene, the laminate layer did not contain the linear low-density polyethylene. Therefore, bending pinhole resistance was poor.

In Comparative example 12, since high-pressure-processed low density polyethylene (LDPE) was added as polyethylene, heat-sealing strength was poor.

**Claims**

**1.** A layered film having at least a base material layer and a sealant layer, wherein

the base material layer is a biaxially stretched polyamide film,
in the biaxially stretched polyamide film, a layer B is laminated on at least one surface of a layer A,
the layer A contains 70% by mass or more and 99% by mass or less of a polyamide 6 resin having ε-caprolactam derived from fossil fuel as a lactam unit, and 1% by mass or more and 30% by mass or less of a polyamide resin containing a raw material derived from biomass,
the layer B contains 70% by mass or more and 100% by mass or less of a polyamide 6 resin having ε-caprolactam derived from fossil fuel as a lactam unit,
the sealant layer is an unstretched polyolefin film, and
the unstretched polyolefin film contains 70% by mass or more and 95% by mass or less of a polypropylene-based resin, and 5% by mass or more and 30% by mass or less of a linear low-density polyethylene resin in which at least a part of a raw material thereof is derived from biomass.

2.  The layered film according to claim 1, wherein
the sealant layer is laminated on the layer B side of the base material layer.

3.  The layered film according to claim 1 or 2, wherein
a content of carbon-14 in the base material layer is 1% or more and 30% or less with respect to all carbons in the base material layer.

4.  The layered film according to any one of claims 1 to 3, wherein
at least a part of the raw material of the base material layer is a polyamide resin derived from biomass, and the polyamide resin derived from biomass is at least one type of a polyamide resin selected from the group consisting of polyamide 11, polyamide 410, polyamide 610, and polyamide 1010.

5.  The layered film according to any one of claims 1 to 4, wherein
a content of carbon-14 in the sealant layer is 3% or more and 30% or less with respect to all carbons in the sealant layer.

6.  The layered film according to any one of claims 1 to 5, wherein

the sealant layer has a seal layer, a core layer, and a laminate layer,
a resin composition forming the seal layer contains 94% by mass or more and 100% by mass or less of a propylene-α olefin random copolymer, and 0% by mass or more and 3% by mass or less of a linear low-density polyethylene,
a resin composition forming the core layer contains 25% by mass or more and 97% by mass or less of a propylene-α olefin random copolymer, and 3% by mass or more and 40% by mass or less of a linear low-density polyethylene,
a resin composition forming the laminate layer contains 25% by mass or more and 70% by mass or less of a propylene-α olefin random copolymer and 3% by mass or more and 50% by mass or less of a linear low-density polyethylene, and
the laminate layer, the core layer, and the seal layer are present in this order, in the sealant layer, from a surface in contact with the base material layer.

7.  The layered film according to any one of claims 1 to 6, wherein
a content of carbon-14 in the layered film is 2% or more and 30% or less with respect to all carbons in the layered film.

8.  A packing bag using the layered film according to any one of claims 1 to 7.

<table>
<tr><td colspan="2">**INTERNATIONAL SEARCH REPORT**</td><td>International application No.<br>**PCT/JP2022/028597**</td></tr>
</table>

**A. CLASSIFICATION OF SUBJECT MATTER**

*B32B 27/32*(2006.01)i; *B32B 27/34*(2006.01)i; *B65D 65/40*(2006.01)i
FI: B32B27/32 D; B32B27/34; B65D65/40 D

According to International Patent Classification (IPC) or to both national classification and IPC

**B. FIELDS SEARCHED**

Minimum documentation searched (classification system followed by classification symbols)

B32B27/32; B32B27/34; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/170714 A1 (TOYOBO CO., LTD.) 27 August 2020 (2020-08-27)<br>    claims, examples 1-1 to 1-10, 2-1 to 2-12 | 1-5, 7-8 |
| Y | JP 2021-66840 A (DAINIPPON PRINTING CO., LTD.) 30 April 2021 (2021-04-30)<br>    claims, paragraphs [0059], [0063], [0083], example 3 | 1-5, 7-8 |
| A | WO 2021/070500 A1 (TOYOBO CO., LTD.) 15 April 2021 (2021-04-15)<br>    claims, examples 1-9 | 1-8 |
| A | WO 2019/142631 A1 (TOYOBO CO., LTD.) 25 July 2019 (2019-07-25)<br>    claims, examples 1-6 | 1-8 |
| A | JP 2020-183260 A (FUJIMORI KOGYO CO., LTD.) 12 November 2020 (2020-11-12)<br>    claims, examples 1-15 | 1-8 |
| A | JP 2005-103904 A (DAINIPPON INK & CHEM., INC.) 21 April 2005 (2005-04-21)<br>    claims, examples 1-3 | 1-8 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/028597**

| Patent document cited in search report | | | Publication date (day/month/year) | Patent family member(s) | | | Publication date (day/month/year) |
|---|---|---|---|---|---|---|---|
| WO | 2020/170714 | A1 | 27 August 2020 | US | 2022/0135752 | A1 | |
| | | | | claims, examples 1-1 to 1-10, 2-1 to 2-12 | | | |
| | | | | EP | 3928979 | A1 | |
| | | | | CN | 113439026 | A | |
| | | | | KR | 10-2021-0132085 | A | |
| | | | | TW | 202045621 | A | |
| JP | 2021-66840 | A | 30 April 2021 | (Family: none) | | | |
| WO | 2021/070500 | A1 | 15 April 2021 | TW | 202120299 | A | |
| WO | 2019/142631 | A1 | 25 July 2019 | JP | 2021-121507 | A | |
| | | | | TW | 201934343 | A | |
| JP | 2020-183260 | A | 12 November 2020 | (Family: none) | | | |
| JP | 2005-103904 | A | 21 April 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020170714 A
- JP 2018001612 A